(19) Europäisches Patentamt European Patent Office Office européen des brevets

(11) **EP 2 216 367 A1**

(12) **EUROPEAN PATENT APPLICATION**

(43) Date of publication:
**11.08.2010 Bulletin 2010/32**

(51) Int Cl.:
**C08L 23/04** (2006.01)   **C08L 23/06** (2006.01)
**C08L 23/08** (2006.01)

(21) Application number: **09152396.9**

(22) Date of filing: **09.02.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS**<br><br>(71) Applicant: **Total Petrochemicals Research Feluy**<br>**7181 Seneffe (Feluy) (BE)** | (72) Inventors:<br>• **Mandard, Barbera**<br>  **1460 lttre (BE)**<br>• **De Groof, Leen**<br>  **3001 HEVERLEE (BE)**<br>• **Berges, Elke**<br>  **2530 Boechout (BE)** |

(54) **High impact resistance polyethylene**

(57)    The present invention relates to a resin composition comprising from 5% to 100% by weight of high density polyethylene resin produced with a metallocene having a density of from 0.947 to 0.970 g/cm$^3$ and a molecular weight distribution of less than 4, with 0% to 95% by weight of a polyolefin selected from the group consisting of very low density polyethylene, low density polyethylene, linear low density polyethylene, medium density polyethylene, Ziegler-Natta catalysed high density polyethylene, chromium catalysed high density polyethylene, ethylene vinyl acetate copolymers and mixtures thereof. The invention further relates to films made of said composition having an improved rigidity/impact resistance balance.

**EP 2 216 367 A1**

**Description**

The present invention relates to a polyethylene composition having a good balance between rigidity and impact resistance and applications thereof.

Polyethylene is a thermoplastic commodity widely used in consumer products. Nowadays, the general public has become increasingly apprehensive of the impact man-made waste on the environment. For this, there is a growing demand on the market for producing thinner polyethylene articles.

Low density polyethylene offers good optical and impact properties. It can be processed at relatively low temperatures and pressures while maintaining a good melt strength. Low density polyethylene has however limited possibilities for downgauging due to a low draw ratio, and a low rigidity.

Linear-low-density polyethylene has good tear and impact properties; its rigidity however remains low and its processability is well below that of LDPE.

Wherever high rigidity is needed, low density polyethylene and linear low density polyethylene compositions will require overly thick structures. Especially for linear low density polyethylene, where its good impact and tear properties render its downgauging capability useful, the lack of rigidity may be a main drawback. High rigidity may be a requirement for the end product, it is very often a necessity for product handling.

Conventional high density polyethylene produced by polymerisation in the presence of Ziegler-Natta or chromium catalysts offers excellent rigidity but limited mechanical properties such as for example impact resistance. The density of the resin may be reduced to improve the mechanical properties but this results in reduced rigidity.

For many applications, where high rigidity and impact resistance are desired, there is a need in the art to develop polyethylene resins having such a combination of properties. The need is particularly great in applications such as for example films because film producers can then provide thinner films without loss of properties (downgauging). This results in environment protection and cost reduction.

The technical article from Sukhadia et al. entitled "Blown film characterisation of metallocene resins made in the Philips slurry loop process", J. Plast. film sheeting, 14(1), 54-75, 1988 relates to the effects of density, molecular weight, slip/antiblock agents and film thickness on the processability, film property performance (impact and tear strengths) and clarity of blown films. This article discloses that when the density of the metallocene catalysed polyethylene increases, the dart impact of blown films made thereof decreases. This is well shown for blown films made from resins having a density between 0.900 and 0.940 g/cm$^3$.

EP-A-0844277 discloses a homogeneous blend of a low density polyethylene and/or linear low density polyethylene with a metallocene catalysed medium density polyethylene. The blend has a good processability and is used to produce films, mainly blown films. Only examples of films produced by using a metallocene catalysed polyethylene having a density of 0.932 g/cm$^3$ either in pure or in blend with low density polyethylene have been carried out.

EP-A-1225201 discloses the use of a homogeneous blend of a metallocene catalysed medium density polyethylene with low density polyethylene to produce blown films having good balanced shrink properties in machine direction and transverse direction with fast shrink speed and high shrink force at room temperature. Only examples of blown films produced by using a metallocene catalysed polyethylene having a density of 0.934 g/cm$^3$ either in pure or in blend with low density polyethylene have been carried out.

It is an object of the present invention to provide a polyethylene resin that exhibits a high impact resistance.

It is another object of the present invention to provide a polyethylene resin that exhibit a good rigidity.

It is another object of the present invention to provide a polyethylene resin that exhibits a good balance between rigidity and impact resistance.

At least one of the objects is achieved by the invention.

The term "film" as used herein is defined as an extremely thin continuous sheet: the upper limit for thickness is of about 250 microns (Hawley's Condensed Chemical Dictionary, Twelfth Edition, Rev. by R.J.Lewis, Van Nostrand Reinhold Co., New York).

The present invention relates to a resin composition comprising from 5% to 100% by weight of high density polyethylene resin produced with a metallocene having a density of from 0.947 to 0.970 g/cm$^3$ and a molecular weight distribution of less than 4, with 0% to 95% by weight of a polyolefin selected from the group consisting of very low density polyethylene, low density polyethylene, linear low density polyethylene, medium density polyethylene, Ziegler-Natta catalysed high density polyethylene, chromium catalysed high density polyethylene, ethylene vinyl acetate copolymers and mixtures thereof.

The % by weight of the high density polyethylene and of the other polyolefin such as disclosed is based on the total weight of the resin composition.

According to the present invention, the very low density polyethylene (VLDPE) the linear low density polyethylene (LLDPE), the low density polyethylene (LDPE), the medium density polyethylene (MDPE), the Ziegler-Natta high density polyethylene (Zn-HDPE) or the chromium high density polyethylene (Cr-HDPE) have the following density ranges: below 0.900 g/cm$^3$ for VLDPE; 0.900 to 0.935 g/cm$^3$ for LDPE, 0.920 to 0.930 g/cm$^3$ for LLDPE; 0.931 to 0.945 g/cm$^3$

for MDPE; and 0.946 to 0.970 g/cm$^3$ for ZN-HDPE or Cr-HDPE.

Preferably, the metallocene catalysed high density polyethylene used in the present invention (mHDPE) is produced with a metallocene having the general formula

$$R (C_5R'_k)_2 MQ_{Z-2}$$

wherein $(C_5R'_k)$ is a cyclopentadienyl or substituted cyclopentadienyl, each R' is the same or is different and is hydrogen or a hydrocarbyl radical such as alkyl, alkenyl, aryl or arylalkyl radical containing from 1 to 20 carbon atoms or two carbon atoms joined together to form a $C_4$-$C_6$ ring,

R is a substituted or unsubstituted $C_1$-$C_4$ alkylidene radical, a dialkyl germanium, a dialkyl silicon, a diaryl silicon, a di-alkoxysilane, a diphenoxysilane, an alkyl phosphine or amine radical bridging two $(C_5R'_k)_2$ such as defined hereabove,

M is a group 4, 5 or 6 transition metal,

Q is a hydrocarbyl radical such as aryl, alkyl, alkenyl, alkylaryl, or arylalkyl radical having from 1-20 carbon atoms, a hydrocarboxy radical having 1-20 carbon atoms or a halogen and can be the same or different from each other, and

Z is the valence of the transition metal.

Preferably, $(C_5R'_k)$ is a tetra hydrogenated indenyl group, which may be substituted, or not. More preferably, $(C_5R'_k)$ is an unsubstituted tetra hydrogenated indenyl group.

Preferably, M is a group 4 transition metal, more preferably M is zirconium.

Preferably, Q is an alkyl having from 1-4 carbon atoms or a halogen, more preferably Q is methyl or chlorine.

Preferably, R is a substituted or unsubstituted $C_1$-$C_4$ alkylidene radical, more preferably ethylidene or isopropylidene.

Preferably, the metallocene catalyst used is a bridged bis (tetrahydro-indenyl) zirconium dichloride, more preferably an ethylene bis (tetrahydro-indenyl) zirconium dichloride.

The melt index of the mHDPE can be regulated by the amount of hydrogen injected in the reactor. The melt index ($MI_2$) of the polyethylene ranges from 0.1 g/10 min to 100 g/10 min when measured according to ASTM D 1238, conditions 190˚C/2.16 kg. The person skilled in the art is aware that the suitable melt index range of the polyethylene depends upon the respective method of forming an article. If used for films, the mHDPE of the present invention has a melt index in the range from 0.1 g/10 min to 10 g/10 min. For cast film extrusion, the preferred melt index range is from 2 g/10 min to 10 g/10 min, more preferably from 3 g/10 min to 8 g/10 min, yet more preferably from 4 g/10 min to 6 g/10 min. For blown film extrusion, the preferred melt index range is from 0.1 g/10 min to 2 g/10 min, more preferably from 0.3 to 1.2 g/10 min. If used for extrusion coating, the preferred melt index range from 4 to 25 g/10 min. If used for moulding applications, the mHDPE has a melt index in the range from 0.1 to 2. If used for injection applications, the mHDPE has a melt index in the range from 0.1 to 100 g/10 min.

The mHDPE used in the present invention has a density of from 0.947 g/cm$^3$ to 0.970 g/cm$^3$. The density can be of from 0.947, 0.950, 0.955, 0.960, 0.962 g/cm$^3$ up to 0.965 or 0.970 g/cm$^3$. The density is measured at 23˚C following the method described in ASTM D 1505.

The mHDPE can be a homopolymer or a copolymer of ethylene and at least one comonomer, said comonomer may be selected from the group consisting of propylene, 1-butene, 1-hexene, 1-octene and 4-methyl-1-pentene, the preferred comonomer being 1-butene, 1-hexene, 1-octene, the most preferable comonomer being 1-hexene.

The amount of comonomer is of from 0 to 12 wt% based on the weight of the polyethylene, more preferably it is of from 0 to 9 wt% and most preferably it is of from 0 to 7 wt%.

The mHDPE has a monomodal molecular weight distribution. The molecular weight distribution is defined by a parameter, known as the dispersion index (D), which is the ratio between the average molecular weight by weight (Mw) and the average molecular weight by number (Mn). The mHDPE of the present invention has a molecular weight distribution of less than 4, preferably between 2 and 3.5. The molecular weights are determined by gel permeation chromatography (GPC).

The mHDPE is also characterised by a long chain branching structure.

Preferably, the mHDPE resin used in the present invention has a long chain branching index, LCBI, such as defined by R.N. Shroff and H. Mavridis in Macromolecules, Vol.32, N˚ 25, pages 8454-8464 (1999) as the ratio of intrinsic viscosities of PE resins estimated by rheology to that determined via solution techniques:

$$LCBI = \frac{[\eta]_{rheo}}{[\eta]_{sol}} - 1$$

wherein $[\eta]_{rheo}$ and $[\eta]_{sol}$ are the intrinsic viscosities obtained respectively from rheology or via solution.

Thus, LCBI is zero for linear samples and is above zero for polyethylene containing long chain branching. A high level of LCB is encountered with LCBI above 0.8. Instead of determining intrinsic viscosity from the relative viscosity at 0.2 g/dl as explained in the above publication, intrinsic viscosity value is calculated here via solution (expressed in dl/g) in terms of weight average molecular weight Mw (expressed in Da) obtained by size exclusion chromatography (SEC) with equation

$$[\eta]_{sol} = 5.25 * 10^{-4} (M_w)^{0.76}$$

Zero shear viscosity $\eta_0$, expressed in Pa.s, is also related to the weight average molecular weight $M_w$, expressed in Da, by equation

$$\eta_0 = 4.4927 * 10^{-16} (M_w)^{3.8412}$$

This equation is derived with 50 linear PE samples, both metallocene and ZN PE, with Mw ranging from 30 to 700 kDa, dispersion index values from 2 to 25 and density from 0.87 to 0.965 g/cm$^3$.

Zero shear viscosity is estimated by fitting with Carreau-Yasuda flow curve ($\eta$-W) at a temperature of 190°C, obtained by oscillatory shear rheology on ARES equipment (manufactured by TA Instruments) in the linear viscoelasticity domain. Circular frequency (W in rad/s) varies from 0.05-0.1 rad/s to 250-500 rad/s and the shear strain is typically 10 %.

The intrinsic viscosity inferred from rheology can thus be expressed as

$$\eta = \frac{\eta_0}{(1 + (W * \tau)^b)^{((1-n)/b)}}$$

wherein parameters $\tau$, b and n are fitting parameters called respectively relaxation time, breadth parameter and power-law parameter.

The LCBI is thus rewritten as

$$LCBI = \frac{0.572 * (\eta_0)^{0.1979}}{5.25 * 10^{-4} (M_w)^{0.76}} - 1$$

The LCBI of the mHDPE used in the present invention is preferably at least 0.1.

The polymerisation of the mHDPE can be carried out in gas, solution or slurry phase. Slurry polymerisation is preferred for the production of the mHDPE of the present invention. The diluent is preferably isobutane. The polymerisation temperature ranges from 20 to 125°C, preferably from 60 to 95°C and the pressure ranges from 0.1 to 6 MPa, preferably from 2 to 5 MPa, for a time ranging from 90 minutes to 120 minutes, preferably from 30 minutes to 90 minutes. The polymerisation can be carried out in several serially connected reactors.

The average molecular weight is controlled by adding hydrogen during polymerisation. The relative amounts of hydrogen and olefin introduced into the polymerisation reactor are from 0.01 to 10 mole percent hydrogen and from 99.99 to 90 mole percent olefin based on total hydrogen and olefin present, preferably from 0.02 to 0.4 mole percent hydrogen and from 99.98 to 99 mole percent olefin.

The metallocene-based catalytic system used to produce the mHDPE comprises a metallocene such as previously described, a support and an activating agent.

The mHDPE may be used pure or in blend with VLDPE, LDPE, LLDPE, MDPE, ZN-HDPE, Cr-HDPE, EVA or mixtures thereof.

When used in blend, the resin composition of the invention comprises from 5% to less than 100% by weight of mHDPE and from more than 0% to 95% by weight of VLDPE, LDPE, LLDPE MDPE, ZN-HDPE, Cr-HDPE, EVA and mixtures thereof, preferably from 5% to 90% by weight of mHDPE and from 10% to 95% by weight of VLDPE, LDPE, LLDPE MDPE, ZN-HDPE, Cr-HDPE, EVA and mixtures thereof, more preferably from 5% to 50% by weight of mHDPE and from 50% to 95% by weight of VLDPE, LDPE, LLDPE MDPE, ZN-HDPE, Cr-HDPE, EVA and mixtures thereof, yet more preferably from 5% to 45% by weight of mHDPE and from 55% to 95% by weight of VLDPE, LDPE, LLDPE MDPE, ZN-HDPE, Cr-HDPE, EVA and mixtures thereof.

LDPE is generally produced in autoclave or tubular reactors at pressure above 120 MPa with the use of free-radical initiators. The manufacture of the LDPE and of the LLDPE is described for example in "Encyclopedia of Polymer Science and Engineering", second edition, volume 6, on pages 404 to 407 (LDPE) and pages 436 to 444 (LLDPE).

The ZN-HDPE and the Cr-HDPE may be a homopolymer or a copolymer of ethylene and at least one comonomer, said comonomer having from 3 to 10 carbon atoms such as for example 1-butene, 1-hexene and 1-octene. In the LLDPE, LDPE and MDPE, the comonomer is also an alpha-olefin having from 3 to 10 carbon atoms, and may comprise for example 1-butene, 4-methyl pentene, 1-hexene, 1-octene. The LLDPE and MDPE can be produced by any suitable process, including metallocene catalysed process, Ziegler-Natta catalysed process or chrome catalysed process.

When the resin of the invention is a blend, the blend may be obtained by preliminary dry blend or by direct blend in the extruder. Standard additives such as fillers, antioxidants, anti-blocking agents, anti-static agents, anti-fog agents, slip additives, pigments, dyes, and the like can also be added.

The resin composition is particularly suitable for transformation into a film. The film may be a cast, a blown, a mono-oriented and a bi-oriented film. It has been surprisingly found that films formed from the resin of the invention exhibit improved impact resistance compared to films, made from Ziegler-Natta or chromium catalysed polyethylene resins, at equivalent rigidity. This improved impact resistance of the film has been observed at room temperature as well as at temperature ranging from 4˚C to -60˚C. Therefore, the present invention further provides films prepared according to the resin composition **characterised in that** the films are at a temperature comprised in the range of from 4˚C to -60˚C. The temperature can be of from 4˚C, 0˚C, -5˚C, -10˚C, - 15˚C, -18˚C or -20˚C up to -25˚C, -30˚C, -35˚C, -40˚C, -45˚C, -50˚C, -55˚C or -60˚C.

According to one embodiment, the film of the invention is a monolayer film.

According to another embodiment, the film of the invention is a multilayer film.

When used in multilayer films, the resin composition according to the invention can be used in any layer of the film, or in more than one layer of the film, as desired. When more than one layer of the film is formed using the resin composition of the present invention, each such layer can be individually formulated, i.e. the layers formed can be the same or different in density, melt index, thickness and so on, depending upon the desired properties of the film. The other layer(s) can include resins made of for example, high-pressure polymerised low-density polyethylene, linear low density polyethylene, medium density polyethylene, high density polyethylene, ethylene vinyl acetate copolymer, ethylene vinyl alcohol copolymer, polyethylene terephthalate, polypropylene, polyamide and ionomers. In multilayer structures, one or more layers can also be a tie layer or a gas barrier layer containing for example ethylene vinyl alcohol (EVOH). The multilayer structure may also include a laminate. Finally, the monolayer or multilayer films can be coated onto a substrate such as paper, metal and other materials capable of accepting a coating. Such coated structures are also within the scope of the invention.

The thickness of each layer of the film and of the overall film, are not particularly limited, but are determined according to the desired properties of the film. Typical film layers have a thickness of about 1 to 1000 $\mu$m, more typically about 2 to 100 $\mu$m, and typical films have an overall thickness of 2 to 200 $\mu$m, more typically 2 to 100 $\mu$m.

The films of the present invention may be formed by any number of well-known extrusion or coextrusion techniques. Any of the blown or chill roll techniques commonly used are suitable. For example, the composition can be extruded in a molten state through a flat die and then cooled to form a film. Alternatively, the composition can be extruded in a molten state through an annular die and then blown and cooled to form a tubular, blown film, which can then be axially slit and unfolded to form a flat film.

Multi-layer films may be formed by methods well known in the art. The materials forming each layer may be coextruded through a coextrusion feedblock and die assembly to yield a film with two or more layers adhered together but differing in composition. Coextrusion can be adapted to the cast film or the blown film processes. Multi-layer films may also be formed by extrusion coating whereby a substrate material is contacted with the hot molten polymer as the polymer exits the die.

Films according to the invention may be widely used for packaging applications, such as grocery sacks, shipping sacks, bags such as merchandise bags, trash bags. The films can also be applied more particularly in frozen food packaging.

The resin composition of the invention is also suitable for injection moulding and extrusion blow moulding applications. The articles made according to these processes can be mono- or multilayer, at least one of the layers comprising the resin composition of the invention.

The invention further relates to the use of the resin composition according to the invention for producing films, preferably blown films, having an impact resistance greater than the impact resistance of a corresponding film of same thickness and produced under the same processing conditions made of polyolefin selected from the group consisting of very low density polyethylene, low density polyethylene, linear low density polyethylene, medium density polyethylene, Ziegler-Natta catalysed high density polyethylene, chromium catalysed high density polyethylene, ethylene vinyl acetate copolymers and mixtures thereof, **characterised in that** both films have substantially similar tensile strength at yield in machine direction (MD) and/or transverse direction (TD) when measured according to ASTM D 882-02. By substantially similar, it is meant that the MD and/or TD tensile strength difference between both films is not more than 15%. This improvement of impact resistance has been observed when the film is either maintained at room temperature or is maintained at a temperature comprised in the range from 4˚C to -60˚C. The temperature can be of from 4˚C, 0˚C, -5˚C, -10˚C, -15˚C, -18˚C or -20˚C up to -25˚C, -30˚C, -35˚C, -40˚C, -45˚C, -50˚C, -55˚C or -60˚C.

The invention further relates to a deep freeze packaging material comprising at least the use of polyethylene film according to the invention. More particularly, the invention relates to a deep freeze packaging for food applications.

Examples

The advantages of the polyethylene resin of the present invention over those of conventional resins are shown in the following examples.

The tensile strength at yield of the blown and the cast films was determined according to ASTM D 882-02 in the machine direction (MD) and in the transverse direction (TD).

The impact resistance of the blown and of the cast films was determined by the free falling dart method either according to ASTM D 1709-04 (method A) at room temperature or according to ISO 7765-2 at room temperature (23˚C) and at -30˚C. In ISO 7765-2 method, the test has been done on a Fractovis Ceast equipment with a hammer having a diameter of 20 mm and a weight of 5.574 kg. The test speed was 4.43 m/s. For the test at -30˚C, the equipement and the samples have been conditioned at -30˚C respectively for 1 and 2 hours before testing. The samples exhibited a diameter of 40 mm. All the results are based upon an average of 5 samples. The force at peak (in Newton) that represents the maximum force that the film can bear before the beginning of the rupture is given as well as the total energy (in Joule) consumed during the rupture. The elongation of the film at the maximum force that the film can bear before the beginning of the rupture is also given and is identified herein as elongation before rupture (in mm).

Examples 1-2

The metallocene polyethylene resins R1 and R2 prepared by using ethylene bis (4,5,6,7 tetrahydro-1-indenyl) zirconium dichloride were used for producing monolayer blown films of 40 microns thickness identified hereafter respectively films F1 and F2. The catalyst was activated and supported. The properties of the resins are provided in table 1.

Table 1

| Resin | Density (g/cm$^3$) | MI2 (g/10 min) | D | LCBI |
|---|---|---|---|---|
| R1 | 0.947 | 0.7 | 2.1 | 1.96 |
| R2 | 0.956 | 0.9 | 3.2 | 1.1 |

The films were produced on a Macchi line with the following parameters:

- BUR: 2.5
- Screw Speed: 80 rpm
- Die Gap: 1.4 mm
- Die diameter: 120 mm
- Temperature: 200˚C (feed zone) up to 215˚C (die lip).
- Cooling temperature: 18˚C

Comparative examples 1-2

Comparative monolayer blown films of 40 microns thickness were produced on the Macchi line under the same conditions as those described here-above by using:

A chromium catalysed high density polyethylene having a density of 0.958 g/cm³, a $MI_2$ of 0.3 g/10min, a dispersion index of 12.3, a LCBI of 0.4 (film F3),

A commercially available low density polyethylene produced by a high pressure polymerisation process sold by Total Petrochemicals having a density of 0.924 g/cm³, a $MI_2$ of 0.8 g/10min, a dispersion index of 5.4 (film F4).

The tensile strength at yield in both directions and the impact resistance of the films and comparative films determined according to ISO 7765-2 are summarised in table 2.

Table 2

| | Example 1 F1 0.947/0.7 | Example 2 F2 0.956/0.9 | Comparative Example 1 F3 0.958/0.3 | Comparative Example 2 F4 0.924/0.8 |
|---|---|---|---|---|
| MD Tensile strength at yield (MPa) | 23.6 | 27.4 | 26.8 | 11.8 |
| TD Tensile strength at yield (MPa) | 24.5 | 27.9 | 30.1 | 11.7 |
| **Temperature** (˚C) | **23** | **23** | **23** | **23** |
| Force at peak (N) | 41.0 | 35.8 | 24.4 | 44.2 |
| Total energy (J) | 0.32 | 0.27 | 0.13 | 0.46 |
| Elongation at break (mm) | 9.7 | 9.94 | 6.84 | 15.32 |
| **Temperature** (˚C) | **-30** | **-30** | **-30** | **-30** |
| Force at peak (N) | 39.3 | 42.1 | 19.6 | 41.8 |
| Total energy (J) | 0.269 | 0.3 | 0.11 | 0.354 |
| Elongation at break (mm) | 7.6 | 8.08 | 4.17 | 9.98 |

Table 2 shows that the films F1 and F2 exhibit a better balance between rigidity and impact resistance when measured at 23˚C as well as -30˚C compared to that of the comparative films F3 and F4.

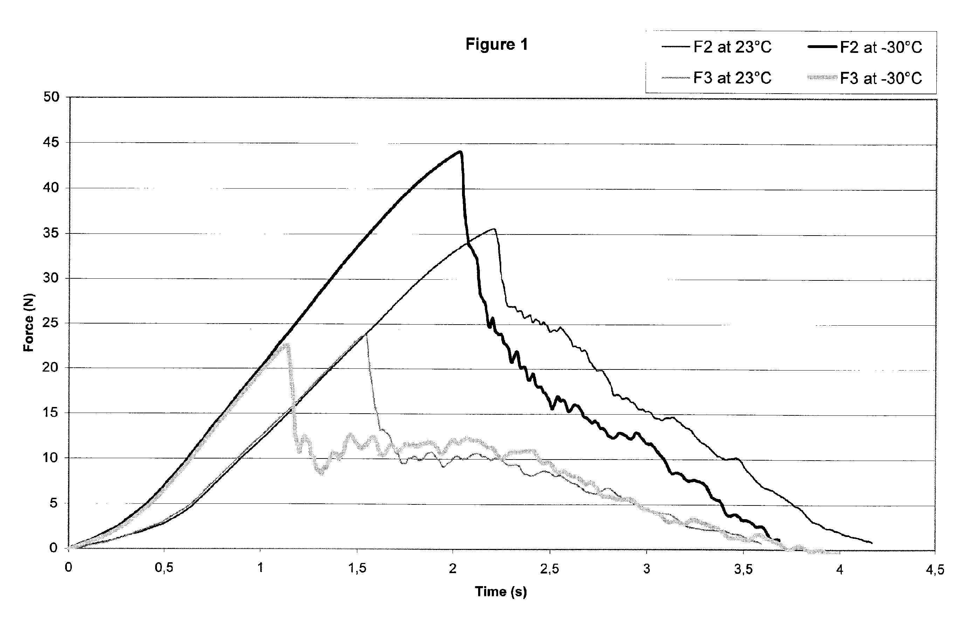

Figure 1 shows the falling weight curves represented by the force (in Newton) versus the time (in sec) at 23 and -30˚C plotted for film F2 and comparative film F3. Said curves show a more ductile behaviour for film F2 than for comparative film F3. A ductile behaviour means that the film deforms for a substantial period of time before breaking.

Example 3

The mPE resin R2 was used for producing a monolayer blown film of 35 microns thickness (F5) on a Macchi line under the following parameters:

- BUR: 2.1
- Screw Speed: 60 rpm
- Die Gap: 1.4 mm
- Die diameter: 120 mm
- Temperature: 195˚C (feed zone) up to 230˚C (die lip).
- Cooling temperature: between 20 and 24˚C

Comparative example 3

A comparative monolayer blown film of 35 microns thickness was produced on the Macchi line under the same conditions as those described in the previous paragraph by using a Ziegler-Natta catalysed high density polyethylene having a density of 0.954 g/cm$^3$, a MI$_2$ of 0.8 g/10min, a dispersion index of 5.1, a LCBI of 0, identified hereinafter F6.

The tensile strength at yield in both directions and the impact resistance of the films and comparative films determined according to ISO 7765-2 are summarised in table 3.

Table 3

|  | Example 3 F5 0.956/0.9 | Comparative example 3 F6 0.954/0.8 |
|---|---|---|
| MD Tensile strength at yield (MPa) | 27.2 | 27.1 |
| TD Tensile strength at yield (MPa) | 29.4 | 33.3 |
| **Temperature (˚C)** | **23** | **23** |
| Force at peak (N) | 30.7 | 23.2 |
| Total energy (J) | 0.21 | 0.13 |
| Elongation at break (mm) | 9.6 | 7.6 |
| **Temperature (˚C)** | **-30** | **-30** |
| Force at peak (N) | 37.2 | 31.1 |
| Total energy (J) | 0.28 | 0.16 |
| Elongation at break (mm) | 8.5 | 6.8 |

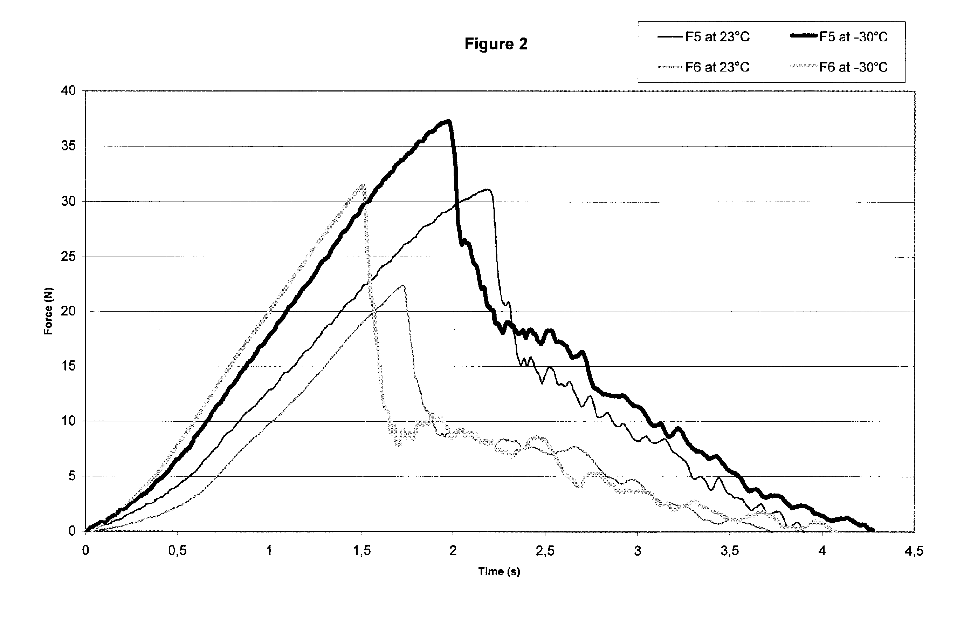

Whereas films F5 and comparative film F6 have substantially the same rigidity, F5 shows a better impact resistance at 23˚C and at -30˚C compared to that of F6. Figure 2 shows the falling weight curves at 23 and -30˚C plotted for film F5 and comparative film F6. Said curves show a more ductile behaviour for film F5 compared to that of F6.

Example 4

A metallocene polyethylene resin R3 prepared by using the activated and supported ethylene bis (4,5,6,7 tetrahydro-1-indenyl) zirconium dichloride and having a density of 0.960 g/cm$^3$, a MI$_2$ of 4.0 g/10min and a dispersion index of 2.9 was used for producing a monolayer cast film of 20 microns thickness (F7).

The films were extruded onto the MEAF equipment under the following conditions:

- Die gap: 250 $\mu$m
- Melt temperature: 260˚C (temperature profile: 190˚C-240˚C-260˚C-260˚C-260˚C-260˚C-260˚C-260˚C-260˚C-260˚C)
- Chill roll temperature: 20˚C
- Throughput: +/- 6.3 kg/h
- Vacuum box at mid position

Comparative examples 4-5

Comparative monolayer cast films of 20 microns thickness were produced on the MEAF equipment under the same conditions as those described in the previous paragraph by using:

A Ziegler-Natta catalysed high density polyethylene having a density of 0.961 g/cm$^3$, a MI$_2$ of 2 g/10min, a dispersion index of 5.7, a LCBI of 0 (film F8).

A commercially available low density polyethylene produced by a high pressure polymerisation process sold by Total Petrochemicals having a density of 0.924 g/cm$^3$, a MI$_2$ of 4 g/10min, a dispersion index of 8 (film F9).

The tensile strength at yield in both directions and the impact resistance of the films and comparative films according to ISO 7762-2 are summarised in table 4.

Table 4

| | Example 4 F7 0.960/4 | Comparative example 4 F8 0.961/2 | Comparative example 5 F9 0.924/4 |
|---|---|---|---|
| MD Tensile strength at yield (MPa) | 23.4 | 24.5 | 11.4 |
| TD Tensile strength at yield (MPa) | 23.8 | 27.0 | 8.3 |
| **Temperature (˚C)** | **23** | **23** | **23** |
| Force at peak (N) | 15.8 | 10.95 | 15.2 |
| Total energy (J) | 0.09 | 0.03 | 0.3 |
| Elongation at break (mm) | 8.86 | 6.14 | 38.3 |
| **Temperature (˚C)** | **-30** | **-30** | **-30** |
| Force at peak (N) | 16.0 | 14.1 | 13.0 |
| Total energy (J) | 0.09 | 0.09 | 0.09 |
| Elongation at break (mm) | 6.4 | 6.5 | 15.7 |

Film F7 exhibits a better balance between rigidity and impact performance at 23˚C and at -30˚C compared to films F8 and F9.

Examples 5-6

The metallocene polyethylene resins R4 and R5 prepared by using the activated and supported ethylene bis (4,5,6,7 tetrahydro-1-indenyl) zirconium dichloride were used for producing monolayer blown film of 35 microns thickness identified hereafter respectively films F10 and F11. The catalyst was activated and supported. The properties of the resins are provided in table 5.

Table 5

| Resin | Density (g/cm$^3$) | MI2 (g/10 min) | D |
|---|---|---|---|
| R4 | 0.955 | 0.9 | 3.2 |
| R5 | 0.957 | 0.9 | 3.2 |

The films were produced on a Macchi line with the parameters such as those already mentioned in example 3.

Comparative examples 6-8

Comparative monolayer blown films of 35 microns thickness were produced on the Macchi line under the same conditions as those already mentioned in exemple 3 by using:

A Ziegler-Natta catalysed polyethylene having a density of 0.951 g/cm$^3$ and a $MI_2$ of 0.95 g/10min (film F12).

A Ziegler-Natta catalysed polyethylene having a density of 0.956 g/cm$^3$ and a $MI_2$ of 0.6 g/10min (film F13).

A Ziegler-Natta catalysed polyethylene having a density of 0.961 g/cm$^3$ and a $MI_2$ of 1 g/10min (film F14).

The tensile strength at yield and the impact resistance of the films and comparative films determined by the ASTM D 1709-04 (method A) are summarised in table 6

Table 6

| | Example 5 F10 0.955/0.9 | Example 6 F11 0.957/0.9 | Comparative example 6 F12 0.951/0.95 | Comparative example 7 F13 0.956/0.6 | Comparative example 8 F14 0.961/1 |
|---|---|---|---|---|---|
| MD Tensile strength at yield (MPa) | 27.1 | 28.0 | 27.2 | 27.1 | 28.0 |
| Dart impact (g) | 79 | 83 | 66 | 50 | 58 |

One can see that at equivalent rigidity, the films of the present invention show higher dart impact values than films made of Ziegler-Natta catalysed polyethylene.

Examples 7-8

The metallocene polyethylene resins R4 and R5 were used for producing monolayer blown film of 40 microns thickness identified hereafter respectively films F15 and F16.

The films were produced on a Macchi line with the parameters such as those already mentioned in examples 1-2.

Comparative examples 9-10

Comparative monolayer blown films of 40 microns thickness were produced on a Macchi line with the parameters such as those already mentioned in examples 1-2 by using:

A chromium catalysed polyethylene having a density of 0.958 g/cm$^3$ and a $MI_2$ of 0.3 g/10min (film F17).

A Ziegler-Natta catalysed polyethylene having a density of 0.961 g/cm$^3$ and a $MI_2$ of 1 g/10min (film F18).

The tensile strength at yield and the impact resistance of the films and comparative films determined by the ASTM D 1709-04 (method A) are summarised in table 7

Table 7

|  | Example 7 F15 0.955/0.9 | Example 8 F16 0.957/0.9 | Comparative example 9 F17 0.958/0.3 | Comparative example 10 F18 0.961/1 |
|---|---|---|---|---|
| MD Tensile strength at yield (MPa) | 26.8 | 28.0 | 26.8 | 28 |
| Dart impact (g) | 89 | 114 | 34.5 | 80.5 |

One can see that at equivalent rigidity, the films of the present invention show higher dart impact values than films made of chromium catalysed polyethylene and Ziegler-Natta catalysed polyethylene.

Examples 9-16

In these examples, metallocene polyethylene resins R6 to R13 prepared by using ethylene bis (4,5,6,7 tetrahydro-1-indenyl) zirconium dichloride were used for producing monolayer blown film of 40 microns thickness identified hereafter respectively films F19 to F26. The properties of the resins are provided in table 9. Resins R6, R7, R8, R9 and R10 are outside the scope of the invention.

Table 9

| Resin | Density (g/cm$^3$) | MI2 (g/10 min) | D |
|---|---|---|---|
| R6 | 0.923 | 0.9 | 2.6 |
| R7 | 0.927 | 0.9 | 2.6 |
| R8 | 0.934 | 0.9 | 2.6 |
| R9 | 0.942 | 0.9 | 2.5 |
| R10 | 0.945 | 0.9 | 2.6 |
| R11 | 0.947 | 0.7 | 2.8 |
| R12 | 0.950 | 0.9 | 2.6 |
| R13 | 0.955 | 0.9 | 3.2 |

The films were produced on the Macchi line with the parameters such as already disclosed in examples 1-2. The properties of the films are mentioned in table 10. The impact resistance of the films was determined by the ASTM D 1709-04 (method A).

Table 10

| | Example 9 F19 0.923/0.9 | Example 10 F20 0.927/0.9 | Example 11 F21 0.934/0.9 | Example 12 F22 0.942/0.9 | Example 13 F23 0.945/0.9 | Example 14 F24 0.947/0.7 | Example 15 F25 0.950/0.9 | Example 16 F26 0.955/0.9 |
|---|---|---|---|---|---|---|---|---|
| MD Tensile strength at yield (MPa) | 11.8 | 13.4 | 16.7 | 21.4 | 22.4 | 23.1 | 25.3 | 27.4 |
| Dart impact (g) | 300 | 210 | 94 | 80 | 72 | 76 | 77.5 | 105.5 |

Table 10 shows that when the density of the resin increases, the dart impact of the film made thereof decreases. This is particularly the case for the resins having a density between 0.923 and 0.945 g/cm³. However, starting from 0.947 g/cm³, one can see that the impact resistance of the film increases when the density of the resin increases. This result was totally unexpected as it was known that when the density of the resin increases, the impact resistance of the film made thereof decreases.

**Claims**

1. A resin composition comprising from 5% to 100% by weight of high density polyethylene produced with a metallocene having a density of from 0.947 to 0.970 g/cm³ and a molecular weight distribution of less than 4, with 0% to 95% by weight of a polyolefin selected from the group consisting of very low density polyethylene, low density polyethylene, linear low density polyethylene, medium density polyethylene, Ziegler-Natta catalysed high density polyethylene, chromium catalysed high density polyethylene, ethylene vinyl acetate copolymers and mixtures thereof.

2. A resin according to claim 1 comprising from 5% to 50% by weight of the high density polyethylene resin and from 50% to 95% by weight of a polyolefin selected from the group consisting of very low density polyethylene, low density polyethylene, linear low density polyethylene, medium density polyethylene, Ziegler-Natta catalysed high density polyethylene, chromium catalysed high density polyethylene, ethylene vinyl acetate copolymers and mixtures thereof.

3. A resin according to claims 1 or 2 **characterised in that** the high density polyethylene resin is produced with a metallocene catalyst having the general formula

$$R\,(C_5R'_k)_2\,MQ_{Z-2}$$

wherein

$(C_5R'_k)$ is a cyclopentadienyl or substituted cyclopentadienyl,
R' is the same or is different and is hydrogen or a hydrocarbyl radical such as alkyl, alkenyl, aryl or arylalkyl radical containing from 1 to 20 carbon atoms or two carbon atoms joined together to form a $C_4$-$C_6$ ring,
R is a substituted or unsubstituted $C_1$-$C_4$ alkylidene radical, a dialkyl germanium, a dialkyl silicon, a diaryl silicon, a di-alkoxysilane, a diphenoxysilane, an alkyl phosphine or amine radical bridging two $(C_5R'_k)_2$ such as defined hereabove,
M is a group 4, 5 or 6 transition metal,
Q is a hydrocarbyl radical such as aryl, alkyl, alkenyl, alkylaryl, or arylalkyl radical having from 1-20 carbon atoms, a hydrocarboxy radical having 1-20 carbon atoms or a halogen and can be the same or different from each other, and
Z is the valence of the transition metal.

4. A resin according to claim 3 **characterised in that** the high density polyethylene resin is produced with the metallocene catalyst wherein M is zirconium.

5. A resin according to claims 1 to 4 **characterised in that** the high density polyethylene resin is produced with the metallocene catalyst wherein each $C_5R'_k$ is a tetrahydrogenated indenyl group.

6. A resin according to claims 1 to 5 **characterised in that** the high density polyethylene resin has a melt index $MI_2$, of from 0.1 g/10 min to 100 g/10 min when measured according to ASTM D 1238, conditions 190°C/2.16 kg.

7. A resin according to claim 6 **characterised in that** the high density polyethylene resin has a melt index $MI_2$, of from 0.1 to 10 g/10.min

8. A resin according to claim 7 **characterised in that** the high density polyethylene resin has a melt index $MI_2$, of from 0.1 to 2 g/10 min.

9. Use of the resin according to claim 6 in injection moulding.

10. Use of the resin according to claim 7 for producing films having an impact resistance greater than the impact resistance of a corresponding film of same thickness and produced under the same processing conditions made of polyolefin selected from the group consisting of very low density polyethylene, low density polyethylene, linear low density polyethylene, medium density polyethylene, Ziegler-Natta catalysed high density polyethylene, chromium catalysed high density polyethylene, ethylene vinyl acetate copolymers and mixtures thereof **characterised in that** both films have substantially similar MD and/or TD tensile strength at yield when measured according to ASTM D 882-02.

11. Use of the resin according to claim 8 in extrusion blow moulding.

12. Films prepared from the resin according to claim 7.

13. Films according to claim 12 **characterised in that** the films are at a temperature comprised in the range of from 4°C to -60°C.

14. Films according to claim 13 **characterised in that** the films are at a temperature comprised in the range of from -10°C to -45°C.

15. Deep freeze packaging material comprising at least a polyethylene film according to claim 12.

16. Packaging material according to claim 15 for food applications.

Figure 1

**Figure 2**

Europäisches
Patentamt

European
Patent Office

Office européen
des brevets

# EUROPEAN SEARCH REPORT

Application Number

EP 09 15 2396

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 674 523 A (TOTAL PETROCHEMICALS RES FELUY [BE]) 28 June 2006 (2006-06-28) * abstract; claims 1-8 * * page 3 * ----- | 1,3-9 | INV. C08L23/04 C08L23/06 C08L23/08 |
| X | EP 1 357 136 A (ATOFINA RES [BE]) 29 October 2003 (2003-10-29) * abstract; claims 1-8 * * pages 5,7 * ----- | 1,3-7,9 | |
| X | EP 1 304 353 A (ATOFINA RES S A [BE]) 23 April 2003 (2003-04-23) * abstract; claims 1-10 * * table 2 * * example b10; table 3 * ----- | 1-9 | |
| X | US 2006/135698 A1 (MIER RODOLFO [US] ET AL) 22 June 2006 (2006-06-22) * abstract; claims 1-30 * * page 1, paragraphs 2,4 * * page 2, paragraphs 32,33 * ----- | 1-4,6-8, 10-16 | |
| X | US 2004/014895 A1 (FARLEY JAMES M [US] ET AL FARLEY JAMES M [US] ET AL) 22 January 2004 (2004-01-22) * abstract; claims 1-44 * * page 12, paragraphs 171,176,175 * * page 18, paragraph 254 * * example 2 * ----- | 1-3,7-16 | TECHNICAL FIELDS SEARCHED (IPC) C08L |

The present search report has been drawn up for all claims

| Place of search | Date of completion of the search | Examiner |
|---|---|---|
| The Hague | 18 March 2009 | Bergmans, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 15 2396

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2009

| Patent document cited in search report | | Publication date | Patent family member(s) | | Publication date |
|---|---|---|---|---|---|
| EP 1674523 | A | 28-06-2006 | CN | 101090938 A | 19-12-2007 |
| | | | WO | 2006067179 A1 | 29-06-2006 |
| | | | JP | 2008525275 T | 17-07-2008 |
| | | | KR | 20070097421 A | 04-10-2007 |
| | | | US | 2008257854 A1 | 23-10-2008 |
| EP 1357136 | A | 29-10-2003 | AU | 2003233082 A1 | 10-11-2003 |
| | | | CN | 1681855 A | 12-10-2005 |
| | | | WO | 03091293 A1 | 06-11-2003 |
| | | | JP | 2005523953 T | 11-08-2005 |
| | | | US | 2007129518 A1 | 07-06-2007 |
| EP 1304353 | A | 23-04-2003 | CN | 1596284 A | 16-03-2005 |
| | | | WO | 03033587 A1 | 24-04-2003 |
| | | | JP | 2005505672 T | 24-02-2005 |
| | | | US | 2004249083 A1 | 09-12-2004 |
| US 2006135698 | A1 | 22-06-2006 | NONE | | |
| US 2004014895 | A1 | 22-01-2004 | NONE | | |

EPO FORM P0459

For more details about this annex : see Official Journal of the European Patent Office, No. 12/82

**EP 2 216 367 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0844277 A

- EP 1225201 A

**Non-patent literature cited in the description**

- Blown film characterisation of metallocene resins made in the Philips slurry loop process. *J. Plast. film sheeting,* 1988, vol. 14 (1), 54-75

- **R.N. Shroff ; H. Mavridis.** *Macromolecules,* 1999, vol. 32 (25), 8454-8464
- Encyclopedia of Polymer Science and Engineering. vol. 6, 404-407436-444